# EUROPÄISCHE PATENTSCHRIFT

(11) **EP 1 075 981 B1**
(45) Veröffentlichungstag und Bekanntmachung des Hinweises auf die Patenterteilung: **13.08.2003**
(21) Anmeldenummer: 00110168.2
(22) Anmeldetag: 10.05.2000
(51) Int. Cl.: B60N 2/08

(54) **Betätigungsvorrichtung für eine Arretierung eines Fahrzeugsitzes**
Latch device for a vehicle seat
Dispositif de blocage pour un siège de véhicule

(30) Priorität: 12.08.1999 DE 19937652
(43) Veröffentlichungstag der Anmeldung: 14.02.2001
(73) Patentinhaber: C.Rob. Hammerstein GmbH & Co.KG, 42699 Solingen (DE)
(72) Erfinder: Karthaus, Ulrich, 42899 Remscheid (DE); Beneker, Wilfried, Dr., 42653 Leichlingen (DE); Houston, Robert, 42799 Leichlingen (DE)
(74) Vertreter: Bauer, Wulf, Dr.

(56) Entgegenhaltungen:
- EP-A- 0 408 932
- EP-A- 0 411 842
- US-A- 3 627 253
- US-A- 3 981 473
- US-A- 5 772 173

## Beschreibung

Die Erfindung bezieht sich auf eine Betätigungsvorrichtung für eine Arretierung eines Fahrzeugsitzes mit einem Handhebel und einem Seilzug, der vorzugsweise als Bowdenzug ausgeführt ist, und über den die Arretierung betätigbar ist.

Bei Betätigungseinrichtungen von Fahrzeugsitzen wird häufig ein schwenkbarer Handhebel benutzt, um die Betätigung der zugeordneten Arretierung durchzuführen. Es handelt sich dabei um manuell betätigbare Arretierungen. Die Betätigung der Arretierung erfolgt zumeist über einen Seilzug, insbesondere Bowdenzug, kann aber auch über eine Zuglasche oder einen Druckarm erfolgen.

Betätigungsvorrichtungen dieser Art haben den Vorteil, dass der zugehörige Handhebel an beliebiger, bedienungsmässig günstiger Stelle angeordnet werden kann. So ist es beispielsweise bei einer Arretierung einer Längsverstellvorrichtung eines Fahrzeugsitzes möglich, den Handhebel unterhalb der Vorderkante eines Sitzbereichs anzuordnen. Dadurch bleibt der Handhebel unabhängig von einer Höheneinstellung der Sitzvorderkante immer für den Benutzer in derselben griffgünstigen Position.

Es gibt nun Betätigungsvorrichtungen, bei denen der Verlauf der am Handhebel aufzubringenden Stellkraft für die Betätigung nicht gleichmässig ist, sondern unstetig verläuft oder sogar Sprungstellen hat. Gemeint ist hier der Verlauf der Kraft, um den Handhebel aus der Ruheposition in die Betätigungsstellung zu schwenken, also um die Arretierung aus ihrer Arretierungsposition in die Freigabestellung zu bringen. Dies ist beispielsweise der Fall bei Arretierungen für Längsverstelleinrichtungen von Fahrzeugsitzen, die mit mehreren Arretierstiften arbeiten, welche einzeln einrasten, aber gemeinsam ausrastbar sind. Ein Beispiel für eine derartige Arretierung gibt die EP 408 932 B1. Im verriegelten Zustand greifen zumeist zwei Arretierstifte der Arretierung ein. Die anderen Arretierstifte liegen eingriffslos auf der Rastenleiste auf. Die Arretierstifte sind dabei einer Schiene, zumeist der Sitzschiene zugeordnet, sie greifen in eine Rastenleiste, die der Bodenschiene der Längsverstelleinrichtung zugeordnet ist.

Wird hier nun die Arretierung gelöst, indem der Handhebel aus seiner Ruheposition in die Betätigungsstellung geschwenkt wird, so werden zunächst die mehr oder weniger tief im Eingriff befindlichen Arretierstifte gezogen und angehoben, anschliesend kommen die nicht rastenden Arretierstifte hinzu und werden ebenfalls angezogen. Ein Benutzer spürt mit jedem hinzukommenden Arretierstift bzw. Rastzahn, den er in die Freigabestellung zieht, einen mehr oder weniger grossen Kraftsprung, also eine Änderung des Drehmoments am Handhebel. Es besteht die Gefahr, dass er die Bewegung des Handhebels zu früh abbricht, weil er meint, es sei bereits eine Endstellung erreicht, obwohl sich der Handhebel noch nicht in der Betätigungsstellung, die für ein vollständiges Freirasten erforderlich ist, befindet.

Eine oberbegriffmässige Betätigungsvorrichtung ist durch die EP 0 411 842, A, veröffentlicht.

Für derartige Verstellvorrichtungen bzw. Arretierungen ist die Betätigungsvorrichtung der eingangs genannten Art im wesentlichen bestimmt.

Ausgehend von der Betätigungsvorrichtung der eingangs genannten Art liegt der Erfindung die Aufgabe zugrunde, die Betätigungsvorrichtung dahingehend weiterzubilden, dass die Betätigung des Handhebels für einen Benutzer vergleichmässigt wird und somit die Gefahr von Fehlbedienungen verringert ist, indem die Betätigungsvorrichtung so ausgelegt ist, dass ein Benutzer eine Bewegung von der Ruheposition in die Betätigungsstellung möglichst immer vollständig ausführt, jedenfalls keine starken Stufen entlang des Bedienungswegs spürt.

Gelöst wird diese Aufgabe durch eine Betätigungsvorrichtung für eine Arretierung eines Fahrzeugsitzes, die aufweist: a) einen Handhebel, b) einen Seilzug, insbesondere Bowdenzug, der an seinem einen Ende am Handhebel angreift und von diesem betätigbar ist, und c) ein Kurvengetriebe, das zwischen Bowdenzug und Arretierung angeordnet ist, das ein erstes Getriebeteil und ein zweites Getriebeteil aufweist, die miteinander über eine Kurvenführung verbunden sind, wobei das andere Ende des Seilzugs am ersten Getriebeteil angreift und das zweite Getriebeteil mit der Arretierung im Eingriff ist, so dass bei Betätigung des Seilzugs das erste Getriebeteil bewegt wird und dadurch das andere Getriebeteil über die Kurvenführung mitnimmt, das seinerseits die Arretierung betätigt.

Erfindungsgemäss wird also ein Kurvengetriebe zwischen Bowdenzug und Arretierung zwischengeschaltet. Dieses Kurvengetriebe hat eine definierte Funktion einer Bewegung des ersten Getriebeteils und das mit diesem bewegungsverbundenen zweiten Getriebeteils. Diese Funktion ist nicht linear. Auf diese Weise wird eine zeitlich linear angreifende Betätigungskraft am Handhebel umgesetzt in eine zeitlich nicht lineare Bewegung des zweiten Getriebeteils, das seinerseits die Arretierung betätigt. Das Kurvengetriebe hat also eine spezielle Übertragungsfunktion. Diese Übertragungsfunktion wird so ausgewählt und bestimmt, dass die Übertragungsfunktion im wesentlichen gegensätzlich ist zum Verlauf des Betätigungsweges der Arretierung. Auf diese Weise können steile Anstiege im Betätigungsweg der Arretierung abgeflacht werden, indem ihnen ein längerer Weg des Handhebels zugeordnet wird usw.. Durch die Kurvenführung ist es somit möglich, den Kraftverlauf am Handhebel deutlich zu vergleichmässigen. Sprunghaft ansteigende Betätigungskräfte, wie sie an der Arretierung nicht zu vermeiden sind, treten daher am Handhebel nicht auf, sie werden umgewandelt in vergleichmässigtere Abläufe der Betätigungskraft. Auf diese Weise sind Fehlbedienungen durch einen Benutzer praktisch ausgeschlossen.

Erfindungsgemäss hat das Kurvengetriebe mindestens zwei Getriebeteile, mit zwei Getriebeteilen erreicht man bereits gute Erfolge. Es ist aber auch möglich, drei Getriebeteile und mehr vorzusehen.

In einer bevorzugten Ausführung hat die Kurvenführung eine Steuerkurve, die in einem Getriebeteil, beispielsweise in dem ersten Getriebeteil, ausgebildet ist und einen Steuervorsprung in dem anderen Getriebeteil. Dieser Steuervorsprung greift in die Steuerkurve ein und bewirkt dadurch die mechanische Bewegungskopplung zwischen den beiden Getriebeteilen. Durch Wahl und Ausbildung der Steuerkurve kann die gewünschte Übertragungsfunktion des Kurvengetriebes erreicht werden.

In einer bevorzugten Ausführung sind beide Getriebeteile schwenkbar um eine jedem Getriebeteil jeweils zugeordnete Schwenkachse angeordnet. Die beiden Schwenkachsen sind dabei vorzugsweise ortsfest gegenüber der Arretierung. Auf diese Weise lässt sich eine mechanisch recht einfach aufzubauende Anordnung der beiden Getriebeteile realisieren, die zudem funktionssicher und klapperfrei ist.

In einer weiteren bevorzugten Ausführung ist ein Getriebeteil an einem querlaufenden Drehrohr angeordnet. Es ist entweder drehfest mit dem Drehrohr ausgebildet oder relativ zum Drehrohr drehbar gelagert. Das Drehrohr verbindet die beiden Sitzseiten quer. Bevorzugt ist es das zweite Getriebeteil, das an diesem Drehrohr angeordnet ist. Über das Drehrohr werden die Arretierungen beider Sitzseiten miteinander verbunden. Weiterhin ergibt sich eine einfache Anordnung und Positionierung des betreffenden Getriebeteils.

In einer besonders bevorzugten Ausführung ist die Arretierung eine Vielstiftarretierung. Sie ist insbesondere für die Arretierung eines Schienenpaars einer Längsführung vorgesehen.

Als sehr günstig hat es sich erwiesen, den Handhebel griffgerecht auf der Unterseite des Sitzbereichs und dessen Vorderkante anzuordnen. Dadurch ist der Handhebel griffgünstig und unabhängig von der Position des Sitzbereichs gegenüber der Bodengruppe des Fahrzeugs angeordnet.

In einer weiteren bevorzugten Ausbildung ist ein Getriebeteil ein Schwenkarm, der um eine erste, an der Sitzschiene stationäre Schwenkachse drehbar ist.

Vorzugsweise ist das erste Getriebeteil in eine Endposition elastisch vorbelastet, die einer Position entspricht, in der die Arretierung im Rastzustand ist. Dadurch wird das Kurvengetriebe stets in die Position elastisch vorbelastet, die der Rastposition der Arretierung entspricht.

Weitere Vorteile und Merkmale der Erfindung ergeben sich aus den übrigen Ansprüchen, der obigen Beschreibung sowie den nun folgenden Ausführungsbeispielen der Erfindung, die unter Bezugnahme auf die Zeichnung im folgenden näher erläutert werden. In der Zeichnung zeigen:
- Fig. 1:: eine Seitenansicht eines Kraftfahrzeugsitzes mit einer Betätigungsvorrichtung für eine Arretierung einer Längsverstelleinrichtung des Fahrzeugsitzes,
- Fig. 2:: eine perspektivische Darstellung mit Blickrichtung von schräg links oben auf ein Schienenpaar einer Längsverstellvorrichtung mit Arretierung und Bowdenzug sowie Kurvengetriebe der Betätigungsvorrichtung,
- Fig. 3:: eine Darstellung ähnlich Figur 2, jedoch in einer anderen Ausführung und
- Fig. 4:: eine vergrösserte Detailansicht der Darstellung gemäss Figur 3, jedoch in einer anderen Betätigungsstellung der Arretierung sowie des Kurvengetriebes und des Bowdenzugs.

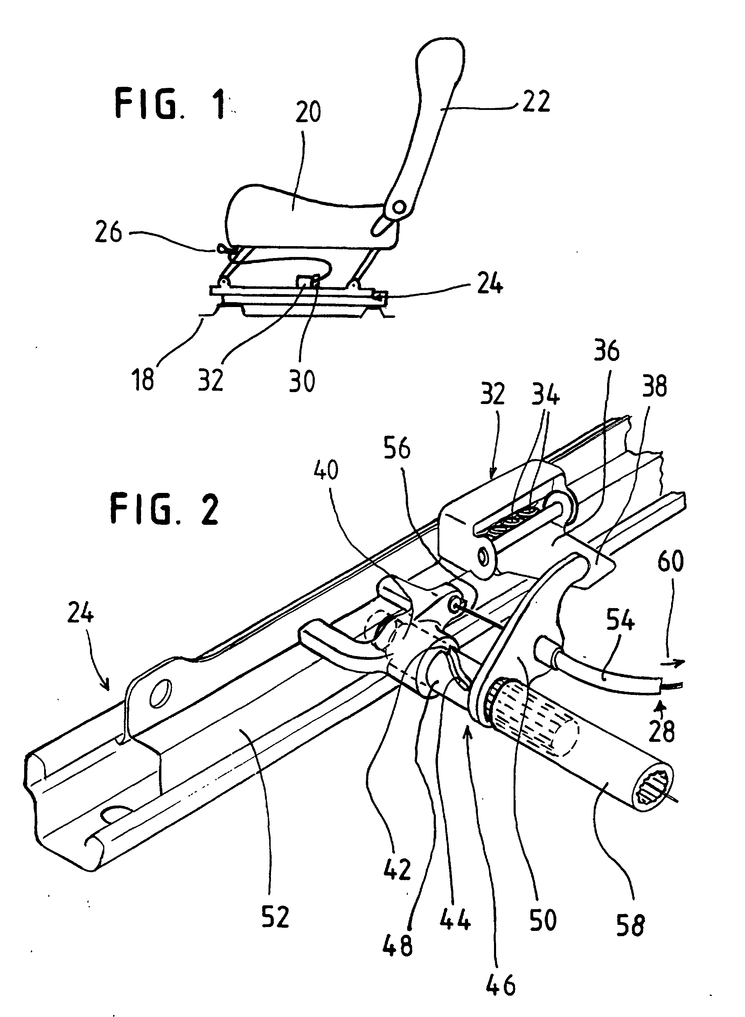

Figur 1 zeigt oberhalb einer Bodengruppe 18 einen Fahrzeugsitz mit einem Sitzbereich 20, einer Rückenlehne 22, einer Längsverstelleinrichtung mit einem linken Schienenpaar 24 der linken Sitzseite sowie einem dahinterliegenden rechten Schienenpaar 24 der rechten Sitzseite und einer Verstellvorrichtung für die Höhe des Sitzbereichs 20 einschliesslich der Höhe der Vorderkante dieses Sitzbereichs 20 gegenüber den Schienenpaaren 24 mit zwei vorderen und zwei hinteren Parallelogrammarmen. Diese bilden an jeder Sitzseite ein Gelenkviereck, das durch geeignete Feststellmittel in der jeweils gewünschten Position fixiert wird. Unterhalb der Sitzvorderkante befindet sich ein Handhebel 26 einer Betätigungsvorrichtung. Der Handhebel 26 ist über einen Bowdenzug 28 über ein Kurvengetriebe 30 mit einer Arretierung 32 verbunden. Die Arretierung selbst ist aus der bereits genannten EP 408 932 B 1 bekannt, so dass auf sie hier nicht näher eingegangen werden muss. Sie hat insgesamt vier Arretierstifte 34, die gemeinsam durch einen doppelarmigen Betätigungshebel 36 in die Freigabestellung gedrückt werden können und durch ihnen jeweils einzeln zugeordnete Federn elastisch in die Arretierungsposition vorbelastet sind. Diese Betätigung der Arretierstifte 34 erfolgt durch einen innenliegenden Arm des zweiarmigen Betätigungshebels 36. Der Betätigungshebel 36 hat weiterhin einen aussenliegenden Arm mit einem Auflagebereich 38. Über diesen aussenliegenden Arm werden Betätigungskräfte eingeleitet, wie im folgenden näher erläutert wird.

Im Ausführungsbeispiel nach Figur 2 besteht das Kurvengetriebe 30 aus einem ersten Getriebeteil 40 in Form einer Schiebehülse mit einem Steuervorsprung 42. Dieser greift in eine Steuerkurve 44 ein, die an einem zweiten Getriebeteil 46 ausgebildet ist. Dieses besteht aus einem Drehrohr 48 und einem mit diesem drehfest verbundenen Arm 50. Das Drehrohr ist in oder an einer Seitenwand der Sitzschiene 52 des dargestellten Schienenpaars 24 drehbar gelagert und axial positioniert. Am Arm 50 stützt sich der Mantel 54 des Bowdenzugs 28 ab, die Seele 56 des Bowdenzugs greift an der Schiebehülse an. Mit dem zweiten Getriebeteil 46 ist ein Querrohr 58 drehfest verbunden, es kann in Axialrichtung verschoben werden, hierzu hat es eine Innenverzahnung, die einer Aussenverzahnung des zweiten Getriebeteils 46 entspricht. Es dient der Übertragung der Betätigungsbewegung auf die andere Sitzseite.

Wird durch den Handhebel 26 die Seele 56 im Sinne des Pfeils 60 gezogen, erfolgt eine Bewegung des ersten Getriebeteils 40 in Form der Schiebehülse von der Sitzschiene 52 weg zum Arm 50 hin. Da das erste Getriebeteil 40 zwar axial bewegbar ist, durch seine beiden gleitend auf der Sitzschiene 52 aufliegenden Auflagefinger aber drehgesichert ist, also keine Drehbewegungen gegenüber der Sitzschiene 52 durchführen kann, wird durch die beschriebene Bewegung das zweite Getriebeteil 46 gedreht, und zwar im Uhrzeigersinn. Dadurch drückt das auf dem Auflagebereich 38 frei aufliegende Ende des Arms 50 den aussenliegenden Arm des Betätigungshebels 36 nach unten, so dass die Arretierung 32 freigegeben wird.

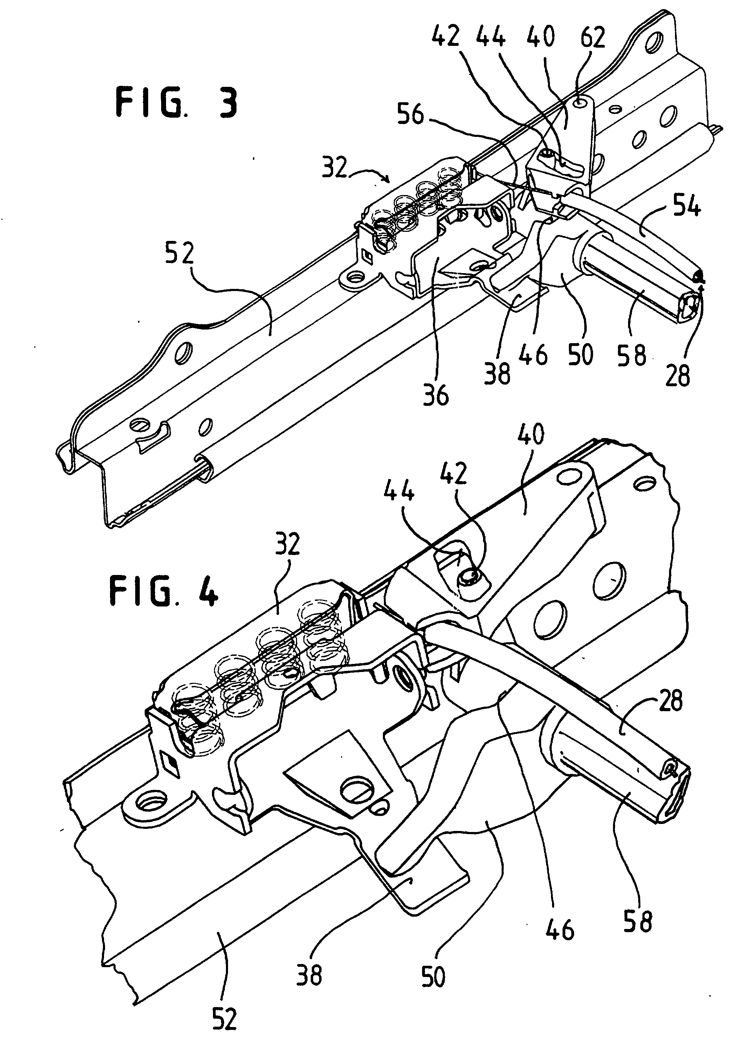

Im Ausführungsbeispiel nach den Figuren 3 und 4 ist das erste Getriebeteil 40 als ein Schwenkarm ausgeführt, der um eine Schwenkachse 62 schwenkbar an der Sitzschiene 52 angeordnet ist. Er hat eine Steuerkurve 44, die als beliebig, z.B. gekrümmt, verlaufendes Langloch ausgebildet ist. In diese Steuerkurve 44 greift der Steuervorsprung 42 in Form eines Bolzens, der vom zweiten Getriebeteil 46 radial wegsteht. Das zweite Getriebeteil 46 ist um die Achse des Querrohrs 58 schwenkbar, es ist aber nicht axial bewegbar. Es ist dem Querrohr 58 fest zugeordnet und in der Sitzschiene 52 drehbar gelagert. In einer Alternative reicht es nicht bis zur Sitzschiene, sondern ist das Querrohr 58 selbst in der Sitzschiene gelagert.

Das zweite Getriebeteil hat wiederum einen Arm 50, der auf dem Auflagebereich 58 des Betätigungshebels 36 aufliegt.

Der Mantel 54 des Bowdenzuges stützt sich am ersten Getriebeteil 40 ab, hierzu ist eine entsprechende Aufnahme vorgesehen. Die Seele 56 des Bowdenzuges ist an der Sitzschiene 52 fixiert.

Figur 3 zeigt die Arretierungsposition, also die normale Position der Arretierung 32. Der Steuervorsprung 42 befindet sich am linken Ende der Steuerkurve 44. Figur 4 zeigt die Freigabestellung der Arretierung. Der Steuervorsprung befindet sich nun am anderen, rechten Ende der Steuerkurve 44. Der das erste Getriebeteil 40 bildende Schwenkarm verläuft nun nahezu parallel zur Längsrichtung der Sitzschiene 52, während er in Figur 3 einen Winkel von etwa 20 bis 25 Grad mit dieser einschliesst.

Bei einer Betätigung des Handhebels 26 laufen im Ausführungsbeispiel nach den Figuren 3 und 4 folgende Bewegungen ab: Bei Zug am Handhebel 26 drückt der Mantel 54 des Bowdenzugs 28 das erste Getriebeteil 40 in Form des Schwenkarms ausgehend von der Position nach Figur 3 in die Position gemäss Figur 4. Während dieser Bewegung gleitet der Steuervorsprung 42 entlang der Steuerkurve 44. Dadurch wird ein Drehen des zweiten Getriebeteils 46 um seine und die Achse des Querrohrs 58 bewirkt. Der Arm 50 des zweiten Getriebeteils 46 kippt dadurch nach unten und drückt so auf den Auflagebereich 38, dass der innenliegende Arm des Betätigungshebels 36 die Arretierstifte 34 freizieht.

Bei dieser Ausführung kann die Arretierung des anderen Schienenpaars direkt über das Querrohr 58 erfolgen, an dem dort lediglich ein Arm 50 drehfest angeordnet ist, der auf den Auflagebereich der zugehörigen Arretierung dieser Sitzseite drückt.

Die Schwenkachsen der beiden Getriebeteile 40, 46 stehen in einem Winkel von 90 Grad zueinander.

In beiden Ausführungsbeispielen hat man noch folgende Möglichkeit, die Übertragungsfunktion des Kurvengetriebes zu beeinflussen: Je nach Wahl des Ortes des Befestigungspunkts der Seele 56 am ersten Getriebeteil (Figur 2) bzw. an der Sitzschiene 52 (Figur 3 und 4) verläuft der dargestellte Endbereich der Seele mehr oder weniger schräg. Es wird also eine mehr oder weniger grosse Wegstrecke der Seele benötigt, um die Arretierung zu betätigen.

Der Rückweg der Betätigungsvorrichtung erfolgt jeweils federbelastet in die Ruheposition.

## Patentansprüche

1. Betätigungsvorrichtung für eine Arretierung (32) eines Fahrzeugsitzes, die aufweist
- einen Handhebel (26),
- einen Seilzug, insbesondere Bowdenzug (28), der an seinem einen Ende am Handhebel (26) angreift und von diesem betätigbar ist, **dadurch gekennzeichnet, dass**
- ein Kurvengetriebe (30) vorgesehen ist, das zwischen Bowdenzug (28) und Arretierung (32) angeordnet ist, das ein erstes Getriebeteil (40) und ein zweites Getriebeteil (46) aufweist, die miteinander über eine Kurvenführung verbunden sind,
wobei das andere Ende des Seilzugs am ersten Getriebeteil (40) angreift und das andere Getriebeteil (46) mit der Arretierung (32) im Eingriff ist, so dass bei Betätigung des Seilzugs das erste Getriebeteil (40) bewegt wird und dadurch das andere Getriebeteil (46) über die Kurvenführung mitnimmt, das seinerseits die Arretierung (32) betätigt.

2. Betätigungsvorrichtung nach Anspruch 1, **dadurch gekennzeichnet, dass** die Kurvenführung eine Steuerkurve (44) in einem Getriebeteil und einen Steuervorsprung (42), der in diese Steuerkurve (44) eingreift, in dem anderen Getriebeteil aufweist.

3. Betätigungsvorrichtung nach Anspruch 1, **dadurch gekennzeichnet, dass** beide Getriebeteile (40, 46) schwenkbar um jeweils eine eigene Schwenkachse (62) am Fahrzeugsitz angeordnet sind.

4. Betätigungsvorrichtung nach Anspruch 1, **dadurch gekennzeichnet, dass** ein Getriebeteil, vorzugsweise das zweite Getriebeteil (46), an einem Querrohr (58) angeordnet ist, das die beiden Sitzseiten quer verbindet.

5. Betätigungsvorrichtung nach Anspruch 1, **dadurch gekennzeichnet, dass** die Arretierung (32) eine Vielstiftarretierung mit mindestens drei, insbesondere mindestens vier Arretierstiften (34) ist.

6. Betätigungsvorrichtung nach Anspruch 1, **dadurch gekennzeichnet, dass** der Handhebel (26) an einem Sitzbereich (20) des Fahrzeugsitzes angeordnet ist.

7. Betätigungsvorrichtung nach Anspruch 1, **dadurch gekennzeichnet, dass** das erste Getriebeteil (40) ein Schwenkarm (50) ist, der um eine erste Schwenkachse (62) drehbar ist, die gegenüber der Arretierung (32) stationär ist.

8. Betätigungsvorrichtung nach Anspruch 1, **dadurch gekennzeichnet, dass** das erste Getriebeteil (40) in eine Endposition elastisch vorbelastet ist, die einer Position entspricht, in der die Arretierung (32) im Rastzustand ist.

9. Betätigungsvorrichtung nach Anspruch 4, **dadurch gekennzeichnet, dass** jeweils eine Arretierung (32) für beide Sitzseiten vorgesehen ist, dass eine dieser Arretierungen (32) eine Betätigungsvorrichtung mit zwei Getriebeteilen (40, 46) hat, die andere Arretierung (32) eine Betätigungsvorrichtung mit nur einem zweiten Getriebeteil (46) hat, und dass die beiden zweiten Getriebeteile (46) der beiden Betätigungsvorrichtungen über das Querrohr (58) drehstarr miteinander verbunden sind.

10. Betätigungsvorrichtung nach Anspruch 1, **dadurch gekennzeichnet, dass**, der Seilzug ein Bowdenzug (28) ist und der Mantel (54) des Bowdenzuges (28) sich am ersten Getriebeteil (40) abstützt.

11. Betätigungsvorrichtung nach Anspruch 1, **dadurch gekennzeichnet, dass** die Arretierung (32) einen nicht linearen Kraftverlauf an einem Betätigungshebel (36) der Arretierung (32) bei einer Bewegung von der Arretierungsstellung in die Freigabestellung hat und dass das Kurvengetriebe (30), insbesondere die Kurvenführung, so abgestimmt ist, dass der Kraftverlauf bei dieser Bewegung am Handhebel (26) möglichst stufenfrei und gleichmässig erfolgt.

## Claims

1. An actuation device for a locking device (32) of a vehicle seat that is provided with
- a hand lever (26),
- a sheathed cable, more specifically a Bowden cable (28), which is attached, at the one side thereof, to the hand lever (26) by means of which it is actuatable, **characterized in that**
- there is provided a cam gear (30) that is disposed between Bowden cable (28) and locking device (32), said cam gear being provided with a first gear portion (40) and a second gear portion (46) that are joined together through a cam guide,
the other end of the sheathed cable being attached to the first gear portion (40) and the other gear portion (46) being in engagement with the locking device (32) so that, when the sheathed cable is actuated, the first gear portion (40) is caused to move and thus drives, by way of the cam guide, the other gear portion (46) which in turn actuates the locking device (32).

2. The actuation device according to claim 1, **characterized in that** the cam guide is provided with a control cam (44) in the one gear portion and with a control projection (42) engaging with said control cam (44) in the other gear portion.

3. The actuation device according to claim 1, **characterized in that** the two gear portions (40, 46) are arranged on the vehicle seat so as to be pivotal each about its own pivot axis (62).

4. The actuation device according to claim 1, **characterized in that** one gear portion, preferably the second gear portion (46), is disposed on a cross tube (58) that transversely joins the two seat sides.

5. The actuation device according to claim 1, **characterized in that** the locking device (32) is a multiple pin locking device with at least three, more specifically at least four locking pins (34).

6. The actuation device according to claim 1, **characterized in that** the hand lever (26) is disposed at a seat zone (20) of the vehicle seat.

7. The actuation device according to claim 1, **characterized in that** the first gear portion (40) is a pivot arm (50) that is rotatable about a first pivot axis (62) which is stationary relative to the locking device (32).

8. The actuation device according to claim 1, **characterized in that** the first gear portion (40) is elastically biased into an end position that corresponds to the position in which the locking device (32) is in its engaged condition.

9. The actuation device according to claim 4, **characterized in that** one locking device (32) is provided for either seat side, that one of said locking devices (32) has an actuation device with two gear portions (40, 46) whereas the other locking device (32) has an actuation device with one second gear portion (46) only, and that the two second gear portions (46) of the two actuation devices are non-rotatably joined together through the cross tube (58).

10. The actuation device according to claim 1, **characterized in that** the . sheathed cable is a Bowden cable (28) and the sheath (54) of the Bowden cable (28) is supported by the first gear portion (40).

11. The actuation device according to claim 1, **characterized in that**, when the locking device (32) is caused to move from the locking position into the release position, the force gradient at an actuation lever (36) of the locking device (32) is non linear and that the cam gear (30), more specifically the cam guide, is adapted so that, when this movement is executed, the force gradient at the hand lever (26) is as continuous and steady as possible.

## Revendications

1. Dispositif de manoeuvre pour un dispositif d'arrêt (32) d'un siège de véhicule, qui présente
- un levier à main (26)
- un câble de transmission, en particulier un câble Bowden (28), qui, à l'une de ses extrémités, se prend sur le levier à main (26) et peut être actionné par celui-ci, **caractérisé par le fait que**
- l'on prévoit une commande à courbe (30) qui est disposée entre le câble Bowden (28) et le dispositif d'arrêt (32) et qui présente une première pièce constitutive de commande (40) ainsi qu'une deuxième pièce constitutive de commande (46) qui sont reliées entre elles par l'intermédiaire d'un guidage curviligne,
l'autre extrémité du câble de transmission se prenant sur la première pièce constitutive de commande (40) et l'autre pièce constitutive de commande (46) étant en prise avec le dispositif d'arrêt (32) de sorte que, lorsque le câble de transmission est actionné, la première pièce constitutive de commande (40) est déplacée et entraîne ainsi, par le guidage curviligne, l'autre pièce constitutive de commande (46) qui, de son côté, actionne le dispositif d'arrêt (32).

2. Dispositif de manoeuvre selon la revendication 1, **caractérisé par le fait que** le guidage curviligne présente une courbe de commande (44) dans une pièce constitutive de commande et une saillie de commande (42) dans l'autre pièce constitutive de commande, ladite saillie de commande se prenant dans cette courbe de commande (44).

3. Dispositif de manoeuvre selon la revendication 1, **caractérisé par le fait que** les deux pièces constitutives de commande (40, 46) sont disposées sur le siège de véhicule de manière à pouvoir pivoter autour de respectivement un propre axe de pivotement (62).

4. Dispositif de manoeuvre selon la revendication 1, **caractérisé par le fait qu'**une pièce constitutive de commande, de préférence la deuxième pièce constitutive de commande (46), est disposée sur un tube transversal (58) qui relie transversalement les deux côtés de siège.

5. Dispositif de manoeuvre selon la revendication 1, **caractérisé par le fait que** le dispositif d'arrêt (32) est un dispositif d'arrêt à broches multiples avec au moins trois, en particulier au moins quatre broches d'arrêt (34).

6. Dispositif de manoeuvre selon la revendication 1, **caractérisé par le fait que** le levier à main (26) est disposé sur une zone assise (20) du siège de véhicule.

7. Dispositif de manoeuvre selon la revendication 1, **caractérisé par le fait que** la première pièce constitutive de commande (40) est un bras oscillant (50) qui peut tourner autour d'un premier axe de pivotement (62) qui est stationnaire par rapport au dispositif d'arrêt (32).

8. Dispositif de manoeuvre selon la revendication 1, **caractérisé par le fait que** la première pièce constitutive de commande (40) est précontrainte de manière élastique dans une position terminale qui correspond à une position dans laquelle le dispositif d'arrêt (32) est en état d'arrêt.

9. Dispositif de manoeuvre selon la revendication 4, **caractérisé par le fait que** l'on prévoit respectivement un dispositif d'arrêt (32) pour les deux côtés du siège, que l'un de ces dispositifs d'arrêt (32) présente un dispositif de manoeuvre avec deux pièces constitutives de commande (40, 46), l'autre dispositif d'arrêt (32) présente un dispositif de manoeuvre avec seulement une deuxième pièce constitutive de commande (46), et que les deux secondes pièces constitutives de commande (46) des deux dispositifs de manoeuvre sont reliées entre elles par le tube transversal (58) d'une manière rigide en rotation.

10. Dispositif de manoeuvre selon la revendication 1, **caractérisé par le fait que** le câble de transmission est un câble Bowden (28) et que la gaine (54) du câble Bowden (28) prend appui sur la première pièce constitutive de commande (40).

11. Dispositif de manoeuvre selon la revendication 1, **caractérisé par le fait que** le dispositif d'arrêt (32) a un chemin non linéaire de force sur un levier de manoeuvre (36) du dispositif d'arrêt (32) lors d'un mouvement de la position d'arrêt dans la position de libération, et que la commande à courbe (30), en particulier le guidage curviligne, est adapté de telle manière que, lors de ce mouvement, le chemin de force sur le levier à main (26) est aussi continu et régulier que possible.
